Europäisches Patentamt

European Patent Office

Office européen des brevets

(11) Publication number: **0 358 907 B1**

## EUROPEAN PATENT SPECIFICATION

(45) Date of publication of patent specification: **20.10.93**

(51) Int. Cl.5: **B42C 9/00**, C09J 193/04, C09J 157/02, //(C09J193/04, 153:02,191:00),(C09J157/02, 153:02,191:00)

(21) Application number: **89113894.3**

(22) Date of filing: **27.07.89**

(54) **Toughened hot melt adhesive composition for casing in hardcover books.**

(30) Priority: **17.08.88 US 233174**

(43) Date of publication of application:
**21.03.90 Bulletin  90/12**

(45) Publication of the grant of the patent:
**20.10.93 Bulletin  93/42**

(84) Designated Contracting States:
**DE FR GB IT NL SE**

(56) References cited:
**EP-A- 0 279 279**
**US-A- 3 950 291**

(73) Proprietor: **National Starch and Chemical Investment Holding Corporation**
**501 Silverside Road**
**Wilmington, Delaware 19809(US)**

(72) Inventor: **Flanagan, Thomas P.**
**236 Piazza di Luna**
**Venice Florida 34285(US)**

(74) Representative: **Hagemann, Heinrich, Dr. et al**
**Patentanwälte**
**Hagemann & Kehl**
**Postfach 860329**
**D-81630 München (DE)**

EP 0 358 907 B1

EP 0 358 907 B1

**Description**

In the manufacture and binding of hardcover books (also referred to as "case bound" or "edition bound"), one of the last operations is the "casing-in" process wherein the book block is fastened into its hard cover or "case". More specifically, book covers or cases for hardbound books are comprised of a "sandwich" or laminate consisting of the cover material, a casemaking adhesive, and a cover board. The pre-formed case is then joined to the end sheets of a book block to form the completed book cover.

In general, the casing-in process includes the following four basic steps:

(1) An adhesive is evenly applied to the outside of both the first and last pages ("endpapers" or "end sheets") of the book block positioned either manually or mechanically astride a flat, metal, vertical plate called a "wing". The wing then mechanically lifts the book block, drawing it between a pair of rollers that applies the adhesive to the outer endpapers.

(2) The adhesive-coated book block is inserted into a pre-formed case in the position in which the two are to be adhered. The adhesive application operation and case forming operation are usually synchronized so the book and cover meet at their respective spines as the book is lifted through the adhesive-dispensing rollers. As the wing continues to rise, the front and back sides of the cover drape around the book block.

(3) The book block and case are pressed together so the glue or adhesive will bond both together. Conventionally, this step is performed mechanically before the cased-in book is ejected or it may be performed manually by removing and clasping the book block-and-case unit from its wing.

(4) Casing-in is immediately followed by a separate and distinct bindery operation called "building-in", in which heat and pressure are applied to the book so it will lay flat after drying. The hard cover, or case, containing the book block is subjected to pressure and sometimes heat at its joints between a pair of metal "forming irons" which curves the cases' joint into conformity with the shape of the book block's joint.

A number of problems and shortcomings are inherent to these methods for casing-in. Book blocks and cases, while being processed, are subject to continuous stopping and starting, and abrupt and awkward movements. This invites questionable and uneven performance, considerable maintenance, slow operation, and recurrent breakdowns, all contributing to high production costs.

In some cases, as when the book blocks are bound with emulsion adhesives, a drying period before casing-in is required to permit the adhesive binding to set. A direct transition from binding to casing-in before the requisite drying period elapses would place undue stress on the adhesive binding, occasioning distortion, mangling, or misalignment of the book and hence considerable spoilage. In these cases, the book blocks are often piled on skids until dry prior to casing-in, thereby causing delays and requiring additional labor. This process, moreover, brings about another problem. The book blocks towards the bottom of the pile tend to become compressed under the natural weight of the book blocks above. The rollers that apply the glue or paste in the casing-in machine, however, must be adjusted and spaced within close tolerances. Accordingly, the casing-in machine's operator must continually stop the equipment to readjust the rollers. Failure to do so accurately results in excessive adhesive application on the thicker book units (called "creepage"), whereby the overabundant adhesive creeps over the edges of the book block and bonds together several outer pages), or insufficient adhesive application on the thinner book blocks towards the bottom of the pile. Depending upon the shape of the book blocks to be cased-in, as many as three sets of rollers must therefore be continually readjusted. The use of multiple pairs of rollers, moreover, requires the waste of larger quantities of adhesive when the "glue pots" are cleaned at the completion of an operating schedule.

Additionally, it in often necessary for an operator to realign manually the book block within its case after the two have been pressed together. Misalignment occurs frequently because of the abrupt, starting-and stopping movements inherent in the equipment. In addition to the extra labor required, in some cases the misalignment is so severe that the book block and case must be separated by hand and reprocessed. Before recycling, however, the book block must be allowed to dry to prevent adhesive from fouling the equipment's mechanisms.

The multiple and complex steps described above either place stringent demands upon the adhesive employed or the steps themselves must be carefully monitored and adjusted to compensate for the deficiencies of the adhesives. As an example, the water-borne adhesives which are generally used have a limited amount of open time within which the bond must be formed. Consequently, during machinery slow-downs or shut-downs, the required aggressive tack is often lost resulting in poor bonds and rejected stock. Additionally, the use of the water-based adhesives, even with sufficient drying times involved, often permits moisture to seep through the end papers onto the pages of the book causing these pages to wrinkle.

2

If the now complete books were permitted to dry as is, they would warp badly. Water introduced into the case via the historically used water borne adhesive causes another major problem which is particularly severe in low humidity situations. Water from the water borne adhesive is absorbed by the case boards. The case board is relatively thick and the water contacts case board from the inside of the case. The outside of the case board is typically held in position and restricted from movement by the case cloth or cover material. This creates a layered or one sided swelling of the paper fibers of the board stock which results in warping of the covers. Cover warping is a constant problem and exaggerated substantially in winter time when board stock is normally drier. If the cased in books (bonded with waterborne adhesives) could be put into a book press immediately after casing in and left till all the added water reached equilibrium distribution throughout the book the cover warp problem would be corrected. This, of course, takes an inordinate amount of time and is not possible on a continuous production line.

EP-A-0 279 279 discloses a hard bound book which is cased-in by bonding the endpapers of the book block to a preformed case using a hot melt pressure sensitive adhesive composition comprising: a) 20 to 35% by weight of an A-B-A block or A-B-A-B-A-B multi-block copolymer where the A component is styrene and the B component is butadiene or hydrogenated butadiene and the copolymer contains at least 28 parts styrene per 100 parts copolymer; b) 45 to 70% by weight of a compatible tackifying resin; c) 5 to 30% by weight of a plasticizing oil; d) 0 to 5% by weight of a wax; and e) 0.1 to 2% by weight of a stabilizer. EP-A-0 279 279 constitutes prior art according to Article 54(3)(4) EPC for all designated contracting states.

We have now found that pressure sensitive hot melt compositions prepared from a substantially radial styrene-butadiene block copolymer, the copolymer having a styrene content greater than about 35% by weight, a modulus at 300% elongation of at least 4.5 MPa and a solution viscosity less than about 1000 mPa.s (1000 cps) are particularly useful in the casing-in operations.

Thus, the present invention is directed to a process for casing-in a hand bound book wherein the book is fastened or mounted in the case using a hot melt pressure sensitive adhesive composition comprising:

a) 10 to 40% by weight of a substantially radial styrene-butadiene block copolymer, the copolymer having a styrene content greater than about 35% by weight, a modulus at 300% elongation of at least 4.5 MPa and a solution viscosity less than about (1000 mPa.s) (1000 cps);

b) 20 to 65% by weight of a compatible tackifying resin;

c) 0.1 to 4% by weight stabilizer; and

d) the remainder up to about 60% by weight comprising a plasticizing oil.

The block copolymers useful herein are comprised of styrene and butadiene blocks arranged in a substantially radial configuration and contain at least 35%, and generally up to about 50%, by weight of the styrene moiety. Of greater significance however, the copolymers selected should exhibit a modulus at 300% elongation of at least about 4.5 MPa and a solution viscosity less than about 1000 mPa.s (1000 cps) (25% in toluene at 23°C using a Brookfield viscometer). These copolymers may be prepared using methods taught, for example, in US-A-3,239,478; 3,427,269; 3,700,633; 3,753,936 and 3,932,327. Alternatively they are available from Shell Chemical Co. under the trademark Kraton DXII22 (37% styrene, modulus of 4.8 MPa, viscosity 670 mPa.s (670 cps)) and from Eni Chem Americas (Agip USA Inc.) as Europrene SOL T 162LW/1 (40% styrene, modulus of 5.0 MPa, viscosity 750 mPa.s 750 cps)) or SOI T 162 LW/2 (40% styrene, modulus of 4.6 MPa, viscosity 640 mPa.s 640 cps)). While the optimum amounts of the copolymer used in the adhesive will vary depending on the end use application, the copolymer will be present in the adhesive formulation at levels of 10 to 40% by weight, preferably 15 to 25% by weight.

The tackifying resins useful in the adhesive compositions can be hydrocarbon resins, hydrogenated hydrocarbon resins, synthetic polyterpenes, rosin esters, natural polyterpenes, and the like. More particularly, the useful tackifying resins include any compatible resins or mixtures thereof such as (1) natural and modified rosins such, for example, as gum rosin, wood rosin, tall oil rosin, distilled rosin, hydrogenated rosin, dimerized rosin, and polymerized rosin; (2) glycerol and pentaerythritol esters of natural and modified rosins, such, for example as the glycerol ester of pale, wood rosin, the glycerol ester of hydrogenated rosin, the glycerol ester of polymerized rosin, the pentaerythritol ester of hydrogenated rosin, and the phenolic-modified pentaerythritol ester of rosin; (3) copolymers and terpolymers of natural terpenes, e.g. styrene/terpene and alpha methyl styrene/terpene; (4) polyterpene resins having a softening point, as determined by ASTM method E28-58T, of from 80 to 150°C; the latter polyterpene resins generally resulting from the polymerization of terpene hydrocarbons, such as the bicyclic monoterpene known as pinene, in the presence of Friedel-Crafts catalysts at moderately low temperatures; also included are the hydrogenated polyterpene resins; (5) phenolic modified terpene resins and hydrogenated derivatives thereof such, for example, as the resin product resulting from the condensation, in an acidic medium, of a bicyclic terpene and a phenol; (6) aliphatic petroleum hydrocarbon resins having a Ball and Ring softening point of from 70 to 135°C.; the latter resins resulting from the polymerization of monomers consisting of primarily of

EP 0 358 907 B1

olefins and diolefins; also included are the hydrogenated aliphatic petroleum hydrocarbon resins; (7) aromatic petroleum hydrocarbon resins and the hydrogenated derivatives thereof; and (8) alicyclic petroleum hydrocarbon resins and the hydrogenated derivatives thereof. Mixtures of two or more of the above described tackifying resins may be required for some formulations. The tackifier is used in amounts of 20 to 65% by weight.

The remainder (up to about 60% by weight) of the hot melt adhesive comprises at least one oil diluent. Suitable plasticizing or extending oils include not only the usual plasticizing oils but also olefin oligomers and low molecular weight polymers as well as vegetable and animal oil and their derivatives. The petroleum derived oils which may be employed are relatively high boiling materials containing only a minor proportion of aromatic hydrocarbons (preferably less than 30% and, more particularly, less than 15% by weight of the oil). Alternatively, the oil may be totally non-aromatic. The oligomers may be polypropylenes, polybutenes, hydrogenated polyisoprene, hydrogenated polybutadiene, or the like having average molecular weights between 350 and 10,000.

Among the applicable stabilizers or antioxidants included herein are high molecular weight hindered phenols and multifunctional phenols such as sulfur and phosphorous-containing phenols. Hindered phenols are well known to those skilled in the art and may be characterized as phenolic compounds which also contain sterically bulky radicals in close proximity to the phenolic hydroxyl group thereof. In particular, tertiary butyl groups generally are substituted onto the benzene ring in at least one of the ortho positions relative to the phenolic hydroxy group. The presence of these sterically bulky substituted radicals in the vicinity of the hydroxyl group serves to retard its stretching frequency and, correspondingly, its reactivity; this steric hindrance thus providing the phenolic compound with its stabilizing properties. Representative hindered phenols include: 1,3,5-trimethyl 2,4,6-tris (3,5-di-tert-butyl-4-hydroxybenzyl)benzene; pentaerythrityl tetrakis-3(3,5-di-tert-butyl-4-hydroxyphenyl)propionate; n-octadecyl-3,5-di-tert-butyl-4-hydroxyphenol)-propionate; 4,4'-methylenebis (2,6-tert-butylphenol); 4,4'-thiobis (6-tert-butyl-o-cresol); 2,6-di-tertbutylphenol; 6-(4-hydroxyphenoxy)-2,4-bis(n-octyl-thio)-1,3,5-triazine; di-n-octadecyl 3,5-di-tert-butyl-4-hydroxy-benzylphosphonate; 2-(n-octylthio)ethyl 3,5-di-tert-butyl-4-hydroxy-benzoate; and sorbitol hexa[3-(3,5-di-tert-butyl-4-hydroxyphenyl)-propionate].The stabilizer is present in amounts of 0.1 to 4% by weight, preferably less than about 2%.

Optional additives may be incorporated into the hot melt compositions in order to modify certain properties thereof. Among these additives may be included colorants such as titanium dioxide; and fillers such as talc and clay, etc. as well as minor amounts (e.g. less than about 5%) of a petroleum derived wax.

These hot melt adhesive compositions may be formulated using techniques known in the art. An exemplary procedure involves placing approximately half of the total tackifying resin concentration in a jacketed mixing kettle, preferably in a jacketed heavy duty mixer of the Baker-Perkins or Day type, which is equipped with rotors and thereupon raising the temperature to a range of from 121.11 to 176.67°C (250° to 350°F), the precise temperature utilized depending on the melting point of the particular tackifying resins. When the resin has melted, stirring is initiated and the block polymer and stabilizer are added together with any optional additives whose presence may be desired, the addition of the latter components being extended over a prolonged period in order to avoid the formation of lumps. Mixing and heating are continued until a smooth, homogeneous mass is obtained whereupon the remainder of the tackifying resin and the oil are thoroughly and uniformly admixed therewith. The resultant hot melt adhesives are generally produced with an oil in bulk form and packaged in release coated tube or boxes.

In the following illustrative examples all parts are given by weight and all temperatures in degrees Celsius unless otherwise noted.

EXAMPLE I

The following example illustrates the preparation of adhesives of the invention in formulations suitable for use in the bookbinding industry as discussed above.

In preparing the following samples, a heavy duty mixer which had been heated to 150°C and which was equipped with a stirring paddle was charged with half of the tackifying resin. After melting of the resins, stirring was then initiated whereupon the block copolymers and the antioxidants were added slowly. Heating and stirring were continued until a homogeneous mass was obtained whereupon the remainder of the tackifying resin and the oil were admixed therewith. The molten mixture was then poured into a siliconized paper tube and cooled to room temperature.

Adhesives were prepared from the materials and amounts shown in Table I using the general procedure described above. Viscosity measurements were determined using a Brookfield viscometer (Spindle 27) at 167.78°C (324°F). The adhesives were subjected to the following tests to determine the heat resistance of

4

the adhesive under a constant load and static stress and elevated temperature.

The adhesive was heated to 160°C (320°F) and a lamination of kraft paper was made using heated rollers. The adhesive thickness was 1.27 mm (50 mil) and the bonds having an adhesive area of one square inch. The bonds were aged overnight at 22.22°C (72°F ) and 50% RH. The peel mode samples were then hung in a 40.56°C (105°F) oven using 118g/cm (300 gram/inch weights). The time at which the bond failed was noted as was the mode of failure.

The tensile strength of the hot melt adhesive was determined on samples cast from the hot melts and molded in silicone rubber molds into the shape of dog bones . After cooling, the dog bone shaped specimens were removed from the mold and tested using an Instron Tensile Tester. The force required to start to stretch the specimen is recorded as the "tensile yield", the force required to break the specimen as "tensile break". This procedure also provides a measurement of percent elongation, which is the percentage stretch of the hot melt sample at the point of rupture in obtaining the ultimate tensile strength.

TABLE I

| Sample | Polymer | Amount | Resin | Amount | Oil | Tensile Strength (MPa) | | K/K (h) | Viscosity mPa.s (cps) |
|---|---|---|---|---|---|---|---|---|---|
| | | | | | | Y | U | | |
| 1 | DX1122X | 23 | Permalyn 305[1] | 59 | 18 | 0.06 | 1.17 | 3-1/2 | 2975 |
| 2 | Sol T162 LW/1[2] | 23 | Permalyn 305 | 59 | 18 | 0.09 | 1.27 | 6-1/2 | 3365 |
| 3 | Stereon 840A | 23 | Permalyn 305 | 59 | 18 | 0.04 | 0.59 | 3-1/2 | 2915 |
| 4 | DX1122X | 23 | Permalyn 305 | 57 | 20 | 0.05 | 1.16 | 5-1/2 | 2950 |
| 5 | Firestone SR 7360[3] | 23 | Permalyn 305 | 57 | 20 | 0.04 | 0.86 | 2-1/2 | 2525 |
| 6 | DX1122X | 21 | ECR 149B[4] | 60 | 19 | 0.05 | 1.17 | 2 | 2400 |
| 7 | Sol T162 LW/2 | 21 | ECR 149B | 60 | 19 | 0.07 | 1.27 | 2-3/4 | 2420 |
| 8 | Stereon 840A | 21 | ECR 149B | 60 | 19 | 0.04 | 0.62 | 3-1/2 | 2470 |
| 9 | DX1122X | 15 | ECR 149A[5]<br>ECR 149B | 30<br>30 | 25 | 0.03 | 0.82 | 1 | 760 |
| 10 | Stereon 840A | 21 | ECR 149A<br>ECR 149B | 30<br>30 | 19 | 0.05 | 0.72 | 5-1/3 | 2630 |
| 11 | Stereon 840A | 15 | ECR 149A<br>ECR 149B | 30<br>30 | 25 | 0.02 | 0.38 | 1-2/3 | 685 |
| 12 | DX1122X | 21 | ECR 149A<br>ECR 149B | 30<br>30 | 19 | 0.07 | 1.3 | 7-1/4 | 3010 |
| 13 | DX1122X | 15 | Kristalex[6]<br>ECR 149B | 8<br>52 | 25 | 0.04 | 1.14 | 8-3/4 | 570 |
| 14 | Sol T162 LW/2 | 15 | Kristalex<br>ECR 149B | 8<br>52 | 25 | 0.04 | 1.22 | 6-1/4 | 805 |
| 15. | Firestone SR 7360 | 15 | Kristalex<br>ECR 149B | 8<br>52 | 25 | 0.03 | 0.73 | 3-1/4 | 765 |

EP 0 358 907 B1

TABLE I (continued)

| Sample | Polymer | Amount | Resin | Amount | Oil | Tensile Strength (MPa) | | K/K (h) | Viscosity mPa.s cps |
|---|---|---|---|---|---|---|---|---|---|
| | | | | | | Y | U | | |
| 16 | Stereon 840A | 15 | Kristalex<br>ECR 149B | 8<br>52 | 25 | 0.03 | 0.59 | 2-1/4 | 690 |
| 17 | DX1122X | 15 | Kristalex<br>ECR 149A | 8<br>52 | 25 | 0.06 | 1.24 | 25 | 1025 |
| 18 | DX1122X | 21 | M 105[7] | 60 | 19 | .06 | 1.19 | 16 | 2310 |
| 19 | SOL T162X LW/2 | 21 | M 105 | 60 | 19 | .08 | 1.39 | 16 | 2320 |
| 20 | Stereon 840A | 21 | M 105 | 60 | 19 | .04 | 0.83 | 4-1/2 | 2450 |
| 21 | Stereon 840A | 21 | Res D2105[8] | 60 | 19 | .05 | 0.91 | 20-1/2 | 2470 |
| 22 | Stereon 840A | 22.5 | Res D2105 | 60 | 17.5 | .06 | 1.06 | 40 | 2950 |
| 23 | SOL T168 | 22.5 | Res D2105 | 60 | 17.5 | .06 | 1.32 | 82 | 3535 |
| 24 | SOL T168 | 18 | Res D2105 | 60 | 22 | .02 | 0.85 | 4-1/2 | 1390 |
| 25 | DX1122X | 18 | Res D2105 | 60 | 22 | .04 | 1.14 | 32-1/3 | 935 |
| 26 | DX1122X | 15 | Res D2105 | 60 | 22*(9) | .03 | 0.98 | 8 | 600 |

(1) Permalyn 305 is a pentaerythritol ester of rosin from Hercules
(2) Stereon 840A is a styrene butadiene multi-block copolymer containing 43% styrene, having a modulus of 2.4 mPa and a solution viscosity of 650 mPa.s (650 cps.) from Firestone
(3) Firestone SR 7360 is a styrene-butadiene polymer containing 43% styrene, having a modulus at 300% elongation of 3.7 MPa and a solution viscosity of 990 mPa.s (990 cps.)
(4) ECR 149B is an aliphatic/aromatic $C_5/C_9$ resin from Exxon (95°C)
(5) ECR 149A is an aliphatic/aromatic $C_5/C_9$ resin from Exxon (softening pt. 105°C)
(6) Kristalex 5140 is an alpha methyl styrene resin from Hercules (140°C)
(7) M 105 is a styrenated terpene resin from Reichhold
(8) Res D2105 is a styrenated terpene resin from Hercules
(9) Also contained 3 parts ECR 143H, a liquid aliphatic tackifying resin available from Exxon

The testing results of Samples 1-8 show significantly higher ultimate tensile strength of the adhesives of the present invention when contrasted with presently commercially utilized adhesive compositions containing similar amounts of raw materials.

Sample 9 shows that it is possible to use less polymer to obtain a lower viscosity adhesive without sacrifice of tensile strength. (Compare to Sample 11 prepared with 15 parts Stereon). Note however the product did suffer with respect to Kraft/Kraft adhesive and hence would not be readily useful for certain end use applications where stringent heat resistance values are required.

Samples 12, 13 and 14 show results similar to those of Sample 9, additionally overcoming the deficiency of Sample 9 with respect to heat resistance by use of a different tackifier system.

Sample 17 shows a further formulation according to the invention using a different tackifying system. Note, in particular, the high heat resistance value.

Samples 18 through 26 again show the improved heat resistance and ultimate tensile strength achieved using adhesive compositions of the invention as contrasted to conventionally employed Stereon containing adhesive systems with Samples 24, 25 and 26, also showing that lower levels of the Kraton Dll22X may be used to obtain lower viscosity products without sacrifice to the tensile strength.

All of samples 1-22, on testing, gave entirely adhesive modes of failure in the Kraft to Kraft heat resistance test, i.e., adhesive residue was observed on both substrates after bond failure.

The resultant adhesives may be used in the casing-in operation to mount the book into the case. The process in adaptable to use with book blocks bound with adhesives, by sewing or by other mechanical processes. The backbones may be flat-backed or rounded.

## Claims

1. A process for casing-in a hardcover book comprising the steps of:
   (a) applying a hot melt pressure sensitive adhesive to the outside of the first and last pages of a book block;
   (b) inserting the adhesive coated book block into a pre-formed case in the position in which the two are to be adhered; and
   (c) pressing together the book block and case so as to bond both together;
   wherein the hot melt pressure sensitive adhesive composition comprises:
      a) 10 to 40% by weight of a substantially radial styrene-butadiene block copolymer, the copolymer having a styrene content greater than about 35% by weight, a modulus at 300% elongation of at least 4.5 MPa and a solution viscosity less than about 1000 mPa.s (1000 cps);
      b) 20 to 65% by weight of a compatible tackifying resin;
      c) 0.1 to 4% by weight stabilizer; and
      d) the remainder up to about 60% by weight comprising a plasticizing oil.

2. The process of Claim 1 wherein the tackifier in the hot melt adhesive composition is any compatible resin or mixture thereof selected from the group consisting of (1) natural and modified rosins: (2) glycerol and pentaerythritol esters of natural and modified rosins: (3) copolymers and terpolymers of natural terpenes; (4) polyterpene resins having a softening point, as determined by ASTM method E28-58T, of from 80° to 150°C; (5) phenolic modified terpene resins and hydrogentaed derivatives thereof; (6) aliphatic petroleum hydrocarbon resins having a Ball and Ring softening point of from 70° to 135°C/; (7) aromatic petroleum hydrocarbon resins and the hydrogenated derivatives thereof; and (8) alicyclic petroleum hydrocarbon resins and the hydrogenated derivatives thereof.

3. A hardcover book cased-in utilizing the process of Claim 1.

## Patentansprüche

1. Verfahren zum Einbinden eines hartgebundenen Buches, das die Schritte umfaßt
   (a) Aufbringen eines druckempfindlichen Heißschmelzklebstoffes auf die Außenseite der ersten und letzten Seiten eines Buchblockes,
   (b) Einsetzen des klebstoffbeschichteten Buchblockes in einen vorgebildeten Deckel in der Position, in der die beiden zusammengebunden werden sollen, und
   (c) Zusammenpressen von Buchblock und Deckel, so daß die beiden zusammengebunden werden, bei dem die druckempfindliche Heißschmelzklebstoffzusammensetzung umfaßt:
      a) 10 bis 40 Gew.-% eines im wesentlichen radialen Styrol-Butadien-Bockcopolymers, das einen Styrolgehalt größer als etwa 35 Gew.-%, einen Modul bei 300 % Dehnung von mindestens 4,5 MPa und eine Lösungsviskosität von weniger als etwa 1000 mPa.s (1000 cps) aufweist,
      b) 20 bis 65 Gew.-% eines kompatiblen klebrigmachenden Harzes,
      c) 0,1 bis 4 Gew.-% Stabilisator,
      d) wobei der Rest bis zu etwa 60 Gew.-% ein plastifizierendes Öl umfaßt.

**2.** Verfahren nach Anspruch 1, worin der Klebrigmacher in der Heißschmelzklebstoffzusammensetzung jedes kompatible Harz oder eine Mischung davon ist, ausgewählt aus der Gruppe, bestehend aus (1) natürlichen und modifizierten Naturharzen, (2) Glycerol- und Pentaerythritolestern natürlicher und modifizierter Naturharze, (3) Copolymeren und Terpolymeren natürlicher Terpene, (4) Polyterpenharzen mit einem Erweichungspunkt, bestimmt nach dem ASTM-Verfahren E28-58T, von etwa 80 bis 150°C, (5) phenolmodifizierten Terpenharzen und hydrierten Derivaten davon, (6) aliphatischen Erdölkohlenwasserstoffharzen mit einem Kugel- und Ringerweichungspunkt von etwa 70 bis 135°C, (7) aromatischen Erdölkohlenwasserstoffharzen und den hydrierten Derivaten davon und (8) alicyclischen Erdölkohlenwasserstoffharzen und den hydrierten Derivaten davon.

**3.** Hartgebundenes Buch, das nach dem Verfahren von Anspruch 1 eingebunden ist.

**Revendications**

**1.** Procédé d'emboîtage d'un livre à couverture rigide, comprenant les étapes :
(a) d'application d'un adhésif thermofusible sensible à la pression à l'extérieur des première et dernière pages d'un bloc de livre ;
(b) d'insertion du bloc de livre revêtu d'adhésif dans un emboîtage préformé dans la position dans laquelle le bloc et l'emboîtage doivent être liés ; et
(c) de compression du bloc de livre et de l'emboîtage conjointement de manière à les lier l'un à l'autre ;
dans lequel la composition adhésive thermofusible et sensible à la pression comprend :
a) 10 à 40% en poids d'un copolymère séquencé styrènebutadiène essentiellement radial, le copolymère ayant une teneur en styrène supérieure à environ 35% en poids, un module à 300% d'allongement d'au moins 4,5 MPa et une viscosité en solution inférieure à environ 1000 mPa.s (1000 cps) ;
b) 20 à 65% en poids d'une résine d'adhésivité compatible ;
c) 0,1 à 4% en poids d'un stabilisant ; et
d) la quantité restante, allant jusqu'à environ 60% en poids), consistant en une huile plastifiante.

**2.** Procédé suivant la revendication 1, dans lequel l'agent d'adhésivité dans la composition adhésive thermofusible est n'importe quelle résine compatible ou mélange de telles résines compatibles choisies dans le groupe consistant en (1) des colophanes naturelles et modifiées ; (2) des esters de glycérol et de pentaérythritol de colophanes naturelles et modifiées ; (3) des copolymères et terpolymères de terpènes naturels ; (4) des résines polyterpéniques ayant un point de ramollissement, tel qu'il est déterminé par le procédé ASTM E28-58T, de 80° à 150°C : (5) des résines terpéniques à modification phénolique et leurs dérivés hydrogénés ; (6) des résines hydrocarbonées aliphatiques dérivées du pétrole ayant un point de ramollissement par la méthode bille et anneau de 70° à 135°C ; (7) des résines hydrocarbonées aromatiques dérivées du pétrole et leurs dérivés hydrogénés ; et (8) des résines hydrocarbonées alicycliques dérivées du pétrole et leurs dérivés hydrogénés.

**3.** Livre à reliure rigide ayant subi un emboîtage au moyen du procédé suivant la revendication 1.